# EUROPÄISCHE PATENTSCHRIFT

(11) **EP 2 135 065 B1**
(45) Veröffentlichungstag und Bekanntmachung des Hinweises auf die Patenterteilung: **12.09.2018**
(21) Anmeldenummer: 08716492.7
(22) Anmeldetag: 13.03.2008
(51) Int. Cl.: G01N 27/407

(54) **GASSENSOR ENTHALTEND EINE SCHUTZKAPPE**
GAS SENSOR CONTAINING A PROTECTIVE CAP
CAPTEUR DE GAZ COMPORTANT UN CAPOT DE PROTECTION

(30) Priorität: 10.04.2007 DE 102007016976
(43) Veröffentlichungstag der Anmeldung: 23.12.2009
(73) Patentinhaber: Bayerische Motoren Werke Aktiengesellschaft, 80809 München (DE)
(72) Erfinder: EBNER, Joachim, 81379 München (DE); HAUSNER, Oliver, 85630 Grasbrunn (DE); DURST, Bodo, 80993 München (DE)
(86) Internationale Anmeldenummer: PCT/EP2008/001991
(87) Internationale Veröffentlichungsnummer: WO 2008/122340

(56) Entgegenhaltungen:
- EP-A- 1 541 999
- DE-A1- 2 351 815
- DE-A1- 19 628 423
- DE-A1-102004 033 958
- DE-U1- 20 004 514
- JP-A- 2000 171 429
- JP-A- 2001 099 807
- US-A- 4 199 424

## Beschreibung

Die Erfindung betrifft einen Gassensor mit einer Schutzkappe gemäss Anspruch 1.

Gassensoren werden zur Bestimmung von Gasen in Gasgemischen verwendet, indem sie beispielsweise in einem Gasstrom angeordnet werden, sodass ein Teil des Gasstroms an dem Sensorelement vorbeiströmt. Dabei kommen wie eingangs beschriebene Schutzkappen zur Anwendung, um Sensorelemente vor unerwünschten Bestandteilen des Gasgemisches zu schützen und/oder eine optimierte Anströmung des Sensorelements zu gewährleisten.

Gassensoren mit Schutzkappe sind beispielsweise Gegenstand der DE 10 2040 50 222 A1, DE 10 2005 012 449 A1 und DE 196 28 423 A1. Es hat sich jedoch herausgestellt, dass die bekannten Schutzkappen das Sensorelement nur unzureichend schützen und eine definierte Anströmung des Sensorelements nicht gewährleisten. Beispielsweise kann es bei einem NOx-Sensor, der in einem Kraftfahrzeug zur Analyse der Brennkraftmaschinenabgase verwendet wird, dazu kommen, dass insbesondere beim Kaltstart und in der Warmlaufphase das Sensorelement mit Kondensat beaufschlagt wird mit der Folge einer Schädigung des Sensorelements durch Anlagerung von Schadstoffen. Ein derartiges geschädigtes Sensorelement liefert fehlerhafte oder gar keine Signale, sodass der Betrieb der Brennkraftmaschine stark beeinträchtigt ist.
Aus der DE 200 04 541 U1 ist ein elektrochemischer Messfühler bekannt zur Bestimmung von Gaskomponenten und/oder Gaskonzentrationen in Gasgemischen mit einem Sensorelement, das von einem Schutzrohr umgeben ist, das den Zutritt eines Messgases zum Sensorelement erlaubt, wobei sich im Schutzrohr ein keramisches Fasermaterial befindet, bei dem das keramische Fasermaterial beabstandet vom Sensorelement im Schutzrohr angeordnet ist.
Aus der JP 2001 099807 A ist ein Gassensor bekannt mit einen Schutz. Der Schutz weist ein inneres zylindrisches Teil und ein äußeres zylindrisches Teil auf. An Gaseinlässen sind Führungskörper angeordnet, die aus einem Seitenwandteil des äußeren zylindrischen Teils gebildet sind. Die Führungskörper haben die Funktion, einen Kreisstrom eines zu messenden Gases um ein äußeres Seitenwandteil des inneren zylindrischen Teils zu erzeugen. Eine Zentrifugalkraft, die in Verbindung mit dem Kreisstrom erzeugt wird, trennt relativ schwere Wassertropfen, Öltropfen oder ähnliches von einer relativ leichten Gaskomponente und drückt die Tropfen oder ähnliches an eine innere Seitenfläche des Seitenwandteils des äußeren zylindrischen Teils. Auch wenn Wassertropfen, Öltropfen oder ähnliches in dem zu messenden Gas enthalten sind, wird es den Wassertropfen, Öltropfen oder ähnlichen erschwert, in das Innere des inneren zylindrischen Teils einzudringen.

Aufgabe der Erfindung ist es daher, einen eingangs genannten Gassensor bereitzustellen, bei welchem ein Eintrag unerwünschter Bestandteile des Gasgemisches wirksam vermieden und zugleich eine definierte Anströmung des Sensorelements gewährleistet ist.

Erfindungsgemäß wird die Aufgabe mit einer Schutzkappe mit den Merkmalen des Anspruchs 1 gelöst, wobei die Idee zugrunde liegt, den Kondensatabscheider als ringförmig umlaufende, axial in Richtung des wenigstens einen Strömungseingangs des Vorraums geöffnete Krempe auszubilden und im den Kondensatabscheider an einer radial inneren Wand des Vorraums anzuordnen.

Besonders zu bevorzugende Ausführungen der Erfindung sind Gegenstand der abhängigen Ansprüche.

Vorzugsweise weist der Gassensor eine Einrichtung zur Strömungsumlenkung zwischen Sensorelementraum und Vorraum auf. Vorzugsweise weist der Gassensor eine strömungsausgangsseitig des Sensorelementraums angeordnete Einrichtung zur Strömungsbeschleunigung auf.

Besonders bevorzugt ist es, wenn der wenigstens eine Strömungseingang des Vorraums am messseitigen Ende des Vorraums angeordnet ist. Dadurch wird ein Totraum, in welchem sich Partikel oder flüssige Bestandteile anlagern könnten, vermieden.

Durch die Anordnung des Kondensatabscheiders wird der in den Vorraum einströmende Gasstrom umgelenkt, wobei Partikel und/oder flüssige Bestandteile des Gasstroms von diesem getrennt werden. Sehr vorteilhaft ist es, die Einrichtung zur Strömungsumlenkung zwischen Sensorelementraum und Vorraum axial sensoranschlusssseitig des Kondensatabscheiders anzuordnen. Diese Anordnung bedingt ein Rezirkulationsgebiet der Strömung und trägt damit zur besonders guten Abscheidung von Partikel und/oder flüssigen Bestandteilen des Gasstromes bei.

Zweckmäßigerweise umfasst die Einrichtung zur Strömungsumlenkung wenigstens eine Öffnung mit Strömungsleiteinrichtung. Dadurch wird wirksam eine direkte Anströmung des Sensorelements verhindert und damit eine ungleichmäßige Abkühlung des Sensorelements vermieden.

Als besonders günstig hat es sich erwiesen, die Einrichtung zur Strömungsbeschleunigung als kegelförmige Düse auszubilden. Durch eine entsprechende konstruktive Ausgestaltung der kegelförmigen Düse kann auf besonders einfache Weise der am Sensorelement vorbeigeführte Gasstrom insbesondere hinsichtlich Strömungsvolumen und -geschwindigkeit eingestellt werden.

Gemäß eines besonders bevorzugten Ausführungsbeispiels der Erfindung weist der Vorraum neben dem wenigstens einen Strömungseingang wenigstens einen Strömungsausgang auf, wobei von einem einströmenden Gasstrom ein Teilstrom vom Vorraum durch die Einrichtung zur Strömungsumlenkung zwischen Vorraum und Sensorelementraum in den Sensorelementraum abzweigbar ist. Auf diese Weise kann von dem Gasstrom ein definierter Teilstrom abgezweigt und am Sensorelement vorbeigeführt werden.

Einem ebenfalls bevorzugten Ausführungsbeispiel zufolge ist der Einrichtung zur Strömungsbeschleunigung stromaufwärts eine Prallplatte vorgeordnet, so dass das Sensorelement nicht direkt vor einem Strömungsausgang liegt und außerdem die Strömung eine Drosselung erfährt.
Einem weiteren, ebenfalls bevorzugten Ausführungsbeispiel zufolge ist der Einrichtung zur Strömungsbeschleunigung stromabwärts eine wenigstens einen Strömungsausgang aufweisende Zusatzkappe nachgeordnet. Mit der Zusatzkappe wird in besonderem Maße ein Eintritt unerwünschter Partikel und/oder flüssiger Bestandteile des Gasstroms zum Sensorelement durch den Strömungsausgang vermieden.
Nachfolgend werden besonders zu bevorzugende Ausführungsbeispiele der Erfindung unter Bezugnahme auf Figuren näher erläutert, dabei zeigen schematisch und beispielhaft
- Fig. 1: einen Ausschnitt eines Abgasstrangs einer Brennkraftmaschine mit Gassensor zur Bestimmung von Gasen im Abgasgemisch,
- Fig. 2: einen Gassensor mit Schutzkappe,
- Fig. 3: einen Gassensor mit Schutzkappe und Prallplatte und
- Fig. 4: einen Gassensor mit Schutzkappe und Zusatzkappe.

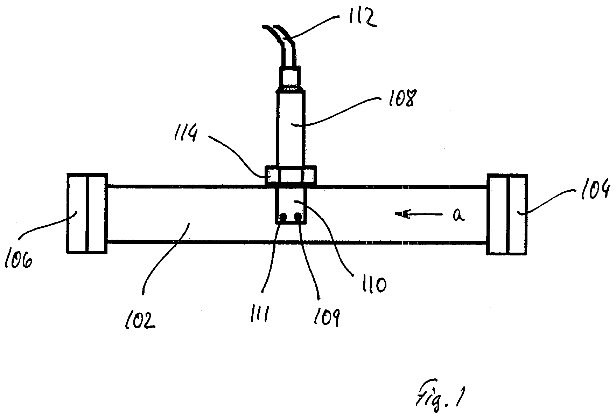

Fig. 1 zeigt einen Ausschnitt eines hier nicht näher dargestellten Abgasstrangs einer Brennkraftmaschine, wobei der Abgasstrom entsprechend der Pfeilrichtung a das Abgasrohr 102 ausgehend von einem Strömungseinlass 104 zu einem Strömungsauslass 106 durchströmt. Ein Gassensor 108, welcher eine Messseite 110 und eine Anschlussseite 112 aufweist, ist am Abgasrohr 102 derart befestigt, dass seine Messseite 110 in den Abgasstrom ragt. Dabei sind Einlassöffnungen 109 vorgesehen, durch die ein Teil des Abgasstroms zu einem Sensorelement strömen kann, dieser Teilstrom kann durch eine Auslassöffnung 111 wieder abströmen. Beispielsweise weist der Gassensor 108 zum Anschuss ein Gewinde und einen Anschlussflansch 114 auf und ist von außen in das Abgasrohr 102 bis zum Flanschanschlag eingeschraubt, wobei zwischen Anschlussflansch 114 des Gassensors 108 und Abgasrohr 102 eine Dichtung vorgesehen ist.

Bei dem Sensor 108 handelt es sich vorliegend um einen NOx-Sensor, welcher zur Messung der NOx-Konzentration im Abgas dient. Ein derartiger Sensor wird insbesondere in Verbindung mit NOx-Speicherkatalysatoren verwendet, um den Beladungs- bzw. Regenerationsstand der Katalysatoren zu erfassen. Die Erfindung kann jedoch auch in Verbindung mit anderen Gassensoren, beispielsweise einer Lambda-Sonde, welche zur auf dem Restsauerstoffgehalt im Abgas basierenden Bestimmung des Kraftstoff-Luftverhältnisses dient, angewendet werden.

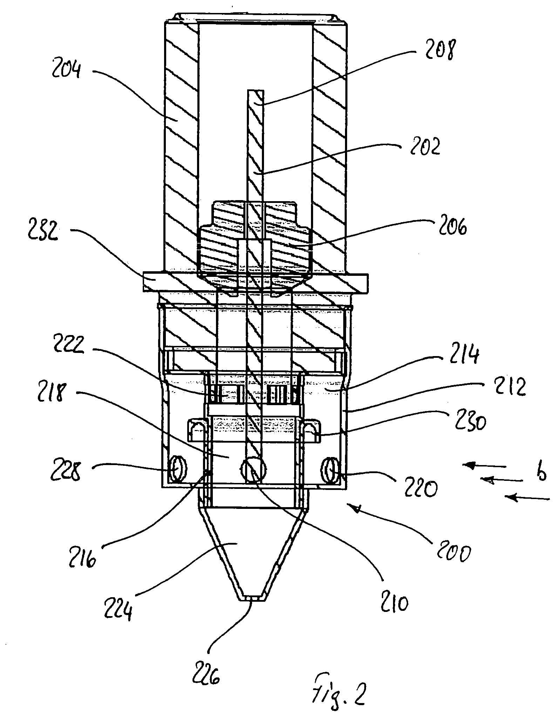

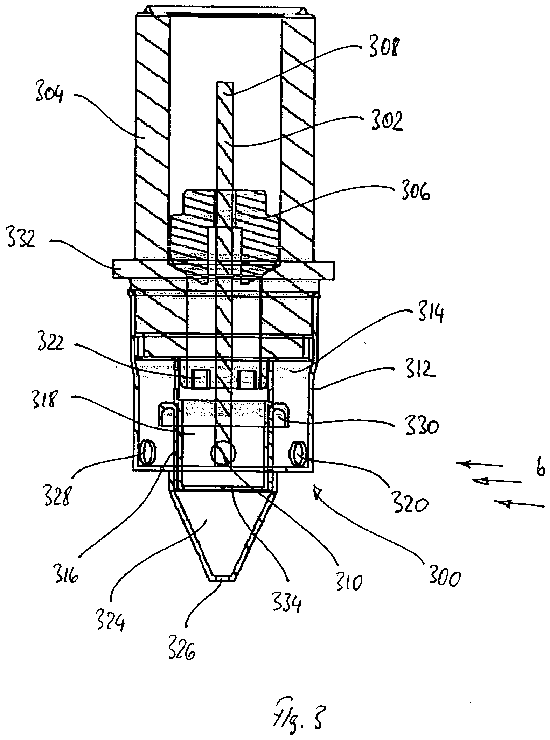

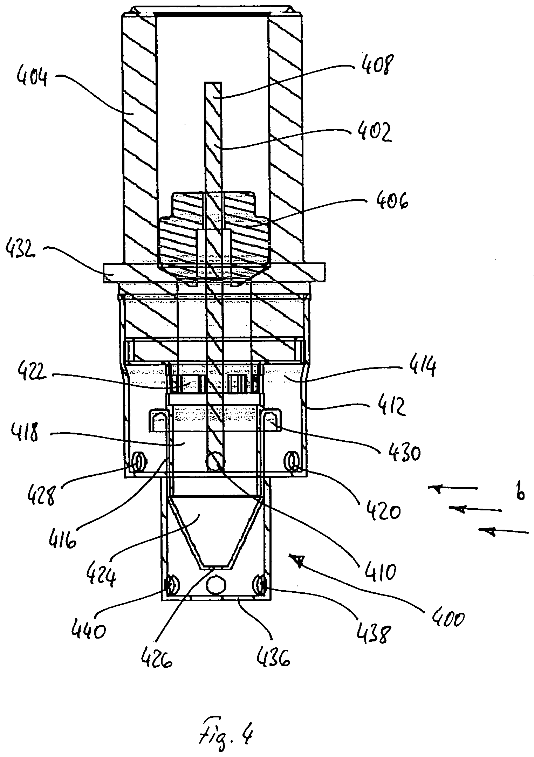

Nachfolgend wird auf die Fig. 2, 3 und 4 Bezug genommen, welche jeweils einen Gassensor mit Schutzkappe 200, 300, 400 im Detail zeigen. In dem Gehäuse 204, 304, 404, des Gassensor ist ein Sensorelement 202, 302, 402 fixiert, wobei das Sensorelement 202, 302, 402 ein anschlussseitiges Ende 208, 308, 408 sowie ein messseitiges Ende 210, 310, 410 aufweist und mittels einer Dichtung 206, 306, 406 gasdicht im Gehäuse 204, 304, 404 angeordnet ist.

Mit dem Gehäuse 204, 304, 404 ist sensorelementmessseitig eine Schutzkappe 200, 300, 400 verbunden, die das Sensorelement 202, 302, 402 schützend umgibt. Die Schutzkappe 200, 300, 400 umfasst ein äußeres Schutzrohr 212, 312, 412 sowie ein inneres Schutzrohr 216, 316, 416. Das innere Schutzrohr 216, 316, 416 umgibt das messseitige Ende 210, 310, 410 des Sensorelements 202, 302, 402. Das äußere Schutzrohr 212, 312, 412 umgibt seinerseits das innere Schutzrohr 216, 316, 416. Das innere Schutzrohr 216, 316, 416 begrenzt einen Sensorelementraum 218, 318, 418, das äußere Schutzrohr 212, 312, 412 begrenzt zusammen mit dem inneren Schutzrohr 216, 316, 416 einen Vorraum 214, 314, 414. Das äußere Schutzrohr 212, 312, 412 weist - eine Anströmung entsprechend der Pfeilrichtung b vorausgesetzt - an dem messseitigen Ende des Vorraums 214, 314, 414 mehrere Strömungseingänge 220, 320, 420 auf.

Im Vorraum 214, 314, 414 ist ein Kondensatabscheider 230, 330, 430 angeordnet, welcher als ringförmig umlaufende, axial in Richtung der Strömungseingänge 220, 320, 420 des Vorraums 214, 314, 414 geöffnete Krempe ausgebildet und an der radial inneren Wand des Vorraums 214, 314, 414, dem inneren Schutzrohr 216, 316, 416 angeordnet ist. Ungeachtet der Bezeichnung "Kondensatabscheider" dient dieser vorliegend zur Abscheidung von Fluid, insbesondere Kondensat, und/oder Partikeln aus dem zu sensierenden Gasstrom.

Zwischen Vorraum 214, 314, 414 und Sensorraum 218, 318, 418 ist eine Strömungsverbindung vorgesehen, welche vorliegend eine Einrichtung 222, 322, 422 zur Strömungsumlenkung mit wenigstens einer Öffnung mit Strömungsleiteinrichtung umfasst. Diese Strömungsverbindung wird hergestellt, indem Bereiche des Innenrohrs 216, 316, 416 zungenartig nach innen gebogen werden, wobei zugleich Strömungsleiteinrichtungen ausgebildet werden. Gemäß einem anderen Ausführungsbeispiel können die Öffnungen jedoch auch ohne oder mit anders ausgeführten Strömungsleiteinrichtungen ausgebildet sein, wobei jedoch eine direkte Anströmung des Sensorelements 202, 302, 402 zu vermeiden ist.

Am messseitigen Ende des inneren Schutzrohrs 216, 316, 416 ist eine Einrichtung 224, 324, 424 zur Strömungsbeschleunigung angeordnet, welche als kegelförmige Düse mit einem Auslass 226, 326, 426 ausgebildet ist. Im inneren Schutzrohr 216, 316, 416 wird die Strömung mittels der Einrichtung 224, 324, 424 beschleunigt, sodass Fluid, insbesondere Kondensat, und/oder Partikel, die in den Bereich des Sensorelementraums 218, 318, 418 gelangt sind, durch die beschleunigte Strömung zum Austrittsloch 226, 326, 426 hinaus befördert wird/werden.

Beim Betrieb der Brennkraftmaschine, d.h. bei einer Abgasströmung im Abgasrohr 102, strömt nur ein Teil des durch die Strömungseingänge 220, 320, 420 einströmenden Gasstroms von dem Vorraum 214, 314, 414 weiter in den Sensorraum 218, 318, 418. ein anderer Teilstrom strömt unmittelbar aus dem Vorraum 214, 314, 414 wieder durch strömungsabgewandten Bohrungen 228, 328, 428 aus. Mittels der Einrichtung 224, 324, 424 zur Strömungsbeschleunigung und den Austritt 226, 326, 426 wird das durch den Sensorraum 218, 318, 418 strömende Volumen bestimmt, indem am Austritt 226, 326, 426 durch entsprechende konstruktive Ausgestaltung ein definierter vorbestimmter Unterdruck erzeugbar ist.

Der Gasstrom, der den Unterdruck am Austritt 226, 326, 426 des Sensorraums 218, 318, 418 erzeugt und der Gasstrom im äußeren Schutzrohr 212, 312, 412 für die Probengasentnahme sind entkoppelt. Durch diese Strömungsführung wird ein schneller Gasaustausch im Vorraum 214, 314, 414 sichergestellt, sodass Fluid, insbesondere Kondensat, und/oder Partikel, das/die in diese äußere Kammer eingedrungen ist/sind, durch die strömungsabgewandten Bohrungen 228, 328, 428 wieder hinausgefördert wird/werden.

Die Strömungsleiteinrichtungen der Einrichtung 222, 322, 422 zur Strömungsumlenkung verhindern eine direkte Anströmung des Sensorelements 202, 302, 402, um eine ungleichmäßige Abkühlung des Sensorelements 202, 302, 402 und damit das Risiko einer Zerstörung durch Wärmespannungen zu vermeiden. Mit den Strömungsleiteinrichtungen wird eine Drallströmung erzeugt.

Die Gesamtfläche, die durch die Öffnungen der Einrichtung 222, 322, 422 zur Strömungsumlenkung für die Strömung in den Sensorelementraum 218, 318, 418 zur Verfügung gestellt wird, ist groß im Vergleich zur Fläche der Austrittsbohrung 226, 326, 426 des Sensorelementraums 218, 318, 418. Es steht damit kein Impuls für die Erzeugung einer Drallströmung um das Sensorelement 202, 302, 402 zur Verfügung. Alternativ können die Öffnungen auch axial in Strömungsrichtung angeordnet werden. Jedoch kann bei einer anderen Anwendung des Gassensors die Erzeugung einer Drallströmung um das Sensorelement 202, 302, 402 wesentlich sein.

Durch den Kondensatabscheider 230, 330, 430 wird ein Rezirkulationsgebiet im Vorraum 214, 314, 414 generiert. Dieses dient zur Abscheidung von Fluidtropfen und Feststoffpartikeln an der Außenseite des inneren Schutzrohrs 216, 316, 416. Zusätzlich verhindert der Kondensatabscheider 230, 330, 430 den Transport von an der Wand angelagerten Tropfen zu den Öffnungen der Einrichtung 222, 322, 422 zur Strömungsumlenkung, was durch die Strömung selbst sowie durch die Vibration des Bauteils infolge der Anregung der Abgasanlage erfolgen kann. Die Wirkung des Kondensatabscheiders 230, 330, 430 ist besonders vorteilhaft, wenn das Bauteil noch kalt ist. Während dieses kritischen Zeitbereichs der Nutzung des Sensorelements 202, 302, 402 aufgrund des heißen Keramikelements scheidet sich ein wesentlicher Teil des sich im Abgas befindlichen Wasserdampfs gezielt an einer für den Sensor unkritischen Stelle ab.

Vorliegend erlaubt die gewählte Stromführung die Minimierung der Kavität im äußeren Schutzrohr 212, 312, 412. Dies unterstützt zum einen den schnellen Gasaustausch im äußeren Schutzrohr 212, 312, 412 und führt zum anderen zu einer schnellen Aufheizung des Gesamtsystems.

Durch die als kegelförmige Düse ausgebildete Einrichtung 224, 324, 424 zur Strömungsbeschleunigung wird sichergestellt, dass Fluid, insbesondere Kondensat, und/oder Partikel, das/die in die Zusatzkappe 436 eindringen/eindringt, nicht durch die Austrittsöffnung 226, 326, 426 des Sensorraums 218, 318, 418 zum Sensorelement 202, 302, 402 gelangen kann/können. Unterstützt wird dies zusätzlich durch den Effekt, dass unabhängig von der Strömungsrichtung des Abgases stets ein aus dem Sensorraum 218, 318, 418 heraus gerichteter Gasstrom vorliegt.

Die Minimierung der Größe der Zusatzkappe 436 im Bereich der Kernströmung des Abgases führt in Kombination mit der guten thermischen Anbindung zu einer schnellen Aufheizung des inneren Schutzrohrs 216, 316, 416 und damit einem trockenen Sensorraum 218, 318, 418.

## Patentansprüche

1. Gassensor (108) mit einer Schutzkappe (200, 300, 400), der Gassensor (108) umfassend ein in einem Gehäuse (204, 304, 404) angeordnetes, eine Anschlussseite (208, 308, 408) und eine Messseite (210, 310, 410) aufweisendes Sensorelement (202, 302, 402) zur Bestimmung von Gasen in Gasgemischen, wobei die Schutzkappe (200, 300, 400) zum messseitigen Schutz des Sensorelements (202, 302, 402) einen wenigstens einen Strömungsausgang (226, 326, 426) aufweisenden Sensorelementraum (218, 318, 418) und einen mit diesem in Strömungsverbindung stehenden, wenigstens einen Strömungseingang (220, 320, 420) aufweisenden Vorraum (214, 314, 414) begrenzt, und im Vorraum (214, 314, 414) ein Kondensatabscheider (230) angeordnet ist, **dadurch gekennzeichnet, dass** der Kondensatabscheider (230) als ringförmig umlaufende, axial in Richtung des wenigstens einen Strömungseingangs (220, 320, 420) des Vorraums (214, 314, 414) geöffnete Krempe ausgebildet und an einer radial inneren Wand (216, 316, 416) des Vorraums (214, 314, 414) angeordnet ist.

2. Gassensor (108) nach Anspruch 1, **gekennzeichnet durch** eine Einrichtung (222, 322, 422) zur Strömungsumlenkung zwischen Sensorelementraum (218, 318, 418) und Vorraum (214, 314, 414).

3. Gassensor (108) nach wenigstens einem der vorhergehenden Ansprüche, **gekennzeichnet durch** eine strömungsausgangsseitig des Sensorelementraums (218, 318, 418) angeordnete Einrichtung (224, 324, 424) zur Strömungsbeschleunigung.

4. Gassensor (108) nach einem der vorhergehenden Ansprüche, **dadurch gekennzeichnet, dass** die Einrichtung (222, 322, 422) zur Strömungsumlenkung zwischen Sensorelementraum (218, 318, 418) und Vorraum (214, 314, 414) axial sensoranschlussseitig des Kondensatabscheiders (230) angeordnet ist.

5. Gassensor (108) nach einem der vorhergehenden Ansprüche, **dadurch gekennzeichnet, dass** die Einrichtung (222, 322, 422) zur Strömungsumlenkung wenigstens eine Öffnung mit Strömungsleiteinrichtung umfasst.

6. Gassensor (108) nach einem der vorhergehenden Ansprüche, **dadurch gekennzeichnet, dass** die Einrichtung (224, 324, 424) zur Strömungsbeschleunigung als kegelförmige Düse ausgebildet ist.

7. Gassensor (108) nach einem der vorhergehenden Ansprüche, **dadurch gekennzeichnet, dass** der Vorraum (214, 314, 414) neben dem wenigstens einen Strömungseingang (220, 320, 420) wenigstens einen Strömungsausgang (228, 328, 428) aufweist, wobei von einem einströmenden Gasstrom ein Teilstrom vom Vorraum (214, 314, 414) durch die Einrichtung (222, 322, 422) zur Strömungsumlenkung zwischen Vorraum (214, 314, 414) und Sensorelementraum (218, 318, 418) in den Sensorelementraum (218, 318, 418) abzweigbar ist.

8. Gassensor (108) nach einem der vorhergehenden Ansprüche, **dadurch gekennzeichnet, dass** der Einrichtung (224, 324, 424) zur Strömungsbeschleunigung stromaufwärts eine Prallplatte (334) vorgeordnet ist.

9. Gassensor (108) nach einem der vorhergehenden Ansprüche, **dadurch gekennzeichnet, dass** der Einrichtung (224, 324, 424) zur Strömungsbeschleunigung stromabwärts eine wenigstens einen Strömungsausgang (440) aufweisende Zusatzkappe (436) nachgeordnet ist.

## Claims

1. A gas sensor (108) with a protective cap (200, 300, 400), the gas sensor (108) comprising a sensor element (202, 302, 402), arranged in a housing (204, 304, 404) and having a connection side (208, 308, 408) and a measurement side (210, 310, 410), for determining gases in gas mixtures, wherein the protective cap (200, 300, 400) for measurement-side protection of the sensor element (202, 302, 402) delimits a sensor element space (218, 318, 418) having at least one flow outlet (226, 326, 426) and an antechamber (214, 314, 414) which is in a flow connection therewith and has at least one flow inlet (220, 320, 420), and a condensate separator (230) is arranged in the antechamber (214, 314, 414), **characterised in that** the condensate separator (230) is designed as an annular circumambient rim opened axially in the direction of the at least one flow inlet (220, 320, 420) of the antechamber (214, 314, 414) and is arranged on a radially inner wall (216, 316, 416) of the antechamber (214, 314, 414).

2. A gas sensor (108) according to Claim 1, **characterised by** a means (222, 322, 422) for deflecting the flow between the sensor element space (218, 318, 418) and antechamber (214, 314, 414).

3. A gas sensor (108) according to at least one of the preceding claims, **characterised by** a means (224, 324, 424), arranged on the flow outlet side of the sensor element space (218, 318, 418), for accelerating the flow.

4. A gas sensor (108) according to one of the preceding claims, **characterised in that** the means (222, 322, 422) for deflecting the flow is arranged between the sensor element space (218, 318, 418) and the antechamber (214, 314, 414), axially on the sensor connection side of the condensate separator (230).

5. A gas sensor (108) according to one of the preceding claims, **characterised in that** the device (222, 322, 422) for deflecting the flow comprises at least one opening with a flow guidance means.

6. A gas sensor (108) according to one of the preceding claims, **characterised in that** the means (224, 324, 424) for accelerating the flow is designed as a conical nozzle.

7. A gas sensor (108) according to one of the preceding claims, **characterised in that** the antechamber (214, 314, 414) has in addition to the at least one flow inlet (220, 320, 420) at least one flow outlet (228, 328, 428), with a partial stream of an incoming gas stream being able to be branched off from the antechamber (214, 314, 414) into the sensor element space (218, 318, 418) through the means (222, 322, 422) for deflecting the flow between the antechamber (214, 314, 414) and sensor element space (218, 318, 418).

8. A gas sensor (108) according to one of the preceding claims, **characterised in that** the means (224, 324, 424) for accelerating the flow is preceded upstream by a baffle plate (334).

9. A gas sensor (108) according to one of the preceding claims, **characterised in that** the means (224, 324, 424) for accelerating the flow is succeeded downstream by an additional cap (436) having at least one flow outlet (440).

## Revendications

1. Capteur de gaz (108) équipé d'un capot de protection (200, 300, 400), ce capteur de gaz (108) comprenant un côté de raccordement (208, 308, 408) situé dans un boîtier (204, 304, 404) et un côté de mesure (210, 310, 410) comportant un élément de capteur (202, 302, 402) permettant de déterminer des gaz dans des mélanges de gaz, le capot de protection (200, 300, 400) délimitant, pour permettre une protection côté mesure de l'élément de capteur (202, 302, 402) une chambre d'élément de capteur (218, 318, 418) comportant au moins une sortie de flux (226, 326, 426) et, une antichambre (214, 314, 414) en liaison fluidique avec la chambre d'élément de capteur comprenant au moins une entrée de flux (220, 320, 420), et dans l'antichambre (214, 314, 414) étant monté un séparateur de condensat (230),
**caractérisé en ce que**
le séparateur de condensat (230) est réalisé sous la forme d'un rebord annulaire périphérique ouvert axialement dans la direction de l'entrée de flux (220, 320, 420) de l'antichambre (214, 314, 414), et est monté sur la paroi radiale interne (216, 316, 416) de l'antichambre (214, 314, 414).

2. Capteur de gaz (108) conforme à la revendication 1,
**caractérisé par**
un dispositif (222, 322, 422) permettant de dévier le flux entre la chambre de l'élément de capteur (218, 318, 418) et l'antichambre (214, 314, 414).

3. Capteur de gaz (108) conforme à au moins l'une des revendications précédentes,
**caractérisé par**
un dispositif (224, 324, 424) permettant d'accélérer le flux monté du côté de la sortie de flux de la chambre de l'élément de capteur (218, 318, 418).

4. Capteur de gaz (108) conforme à l'une des revendications précédentes,
**caractérisé en ce que**
le dispositif (222, 322, 422) permettant de dévier le flux entre la chambre de l'élément de capteur (218, 318, 418) et l'antichambre (214, 314, 414) est monté axialement du côté du raccordement du capteur du séparateur de condensat (230).

5. Capteur de gaz (108) conforme à l'une des revendications précédentes,
**caractérisé en ce que**
le dispositif (222, 322, 422) permettant de dévier le flux comporte au moins une ouverture ayant un dispositif de guidage du flux.

6. Capteur de gaz (108) conforme à l'une des revendications précédentes,
**caractérisé en ce que**
le dispositif (224, 324, 424) permettant d'accélérer le flux est réalisé sous la forme d'une buse conique.

7. Capteur de gaz (108) conforme à l'une des revendications précédentes,
**caractérisé en ce que**
l'antichambre (214, 314, 414) comporte, en plus de l'entrée de flux (220, 320, 420) au moins une sortie de flux (228, 328, 428), et à partir du flux de gaz entrant, un flux partiel provenant de l'antichambre (214, 314, 414) peut bifurquer dans la chambre de l'élément de capteur (218, 318, 418) en passant par le dispositif (222, 322, 422) permettant de dévier le flux entre l'antichambre (214, 314, 414) et la chambre de l'élément de capteur (218, 318, 418).

8. Capteur de gaz (108) conforme à l'une des revendications précédentes,
**caractérisé en ce que**
le dispositif (224, 324, 424) permettant d'accélérer le flux est monté en amont d'une plaque d'impact (334).

9. Capteur de gaz (108) conforme à l'une des revendications précédentes,
**caractérisé en ce que**
le dispositif (224, 324, 424) permettant d'accélérer le flux est monté en aval d'un capot supplémentaire (436) comportant au moins une sortie de flux (440).
